# FASCICULE DE BREVET EUROPEEN

(11) **EP 2 179 144 B1**
(45) Date de publication et mention de la délivrance du brevet: **14.10.2015**
(21) Numéro de dépôt: 08842580.6
(22) Date de dépôt: 06.08.2008
(51) Int. Cl.: F01D 25/28, F02K 1/72, B64D 27/26

(54) **STRUCTURE POUR INVERSEUR DE POUSSÉE**
STRUKTUR FÜR SCHUBUMKEHRER
STRUCTURE FOR THRUST INVERTER

(30) Priorité: 20.08.2007 FR 0705894
(43) Date de publication de la demande: 28.04.2010
(73) Titulaire: Aircelle, 76700 Gonfreville L'Orcher (FR)
(72) Inventeur: ELEGOËT Jean-Yves, F-76640 Bennetot (FR)
(74) Mandataire: Gaillarde, Frédéric F. Ch.
(86) Numéro de dépôt international: PCT/FR2008/001175
(87) Numéro de publication internationale: WO 2009/053560

(56) Documents cités:
- EP-A- 1 457 659
- EP-A- 1 541 468
- FR-A- 2 382 593
- FR-A- 2 891 526
- GB-A- 2 384 827

## Description

La présente invention se rapporte à une structure pour inverseur de poussée.

Comme cela est connu en soi, un inverseur de poussée notamment à grilles comprend en particulier un élément circulaire permettant de fixer cet inverseur sur le carter de soufflante.

Cet élément circulaire est couramment appelé cadre-avant, et se compose en fait de deux demi-cadres avant, les extrémités de chacun de ces demi-cadres étant reliées respectivement à une poutre supérieure et à une poutre inférieure.

Ces poutres, qui font partie des éléments structurants de l'inverseur de poussée, ont notamment vocation à recevoir des rails permettant de réaliser le coulissement de l'inverseur de poussée entre ses positions « jet direct » et « jet inversé ».

Dans la technique antérieure, chaque demi-cadre avant est relié à ses poutres supérieure et inférieure par des entretoises rapportées par fixation d'une part sur l'extrémité concernée du cadre avant et d'autre part sur la poutre concernée (voir par exemple EP 1 457 659).

Les opérations de montage/démontage de ces entretoises sur le demi-cadre avant et sur la poutre concernée consomment beaucoup de temps.

De plus, le nombre important d'organes de fixation (vis, rivets) mis en jeu représente une masse importante, ce qui est évidemment peu souhaitable dans le domaine aéronautique où l'on sait que chaque gramme représente une pénalité d'environ 1 dollar américain sur le prix du matériel concerné.

La présente invention a donc notamment pour but de fournir une structure pour inverseur de poussée qui ne présente pas les inconvénients susmentionnés.

On atteint ce but de l'invention avec :
- une poutre pour structure d'inverseur de poussée, comprenant une partie intégrée formant cuvette apte à s'encastrer dans et à être fixée sur un demi-cadre avant dudit inverseur de poussée,
- un demi-cadre avant pour structure d'inverseur de poussée, conformé à au moins l'une de ses deux extrémités pour pouvoir s'encastrer sur et être fixé sur une cuvette d'une poutre conforme à ce qui précède, et
- une demi-structure pour inverseur de poussée, remarquable en ce qu'elle comprend des poutres supérieure et inférieure et un demi-cadre avant conformes à ce qui précède.

Grâce à la présence d'une cuvette de liaison intégrée à chaque poutre, il n'est plus nécessaire de prévoir d'entretoise pour relier ces organes les uns aux autres.

On peut donc de la sorte diminuer sensiblement le nombre de pièces constitutives de la structure d'inverseur de poussée, ce qui permet non seulement de réduire les durées de montage/démontage, mais encore de diminuer le coût de fabrication.

Par ailleurs, l'intégration des cuvettes aux poutres permet de s'affranchir de tout élément de fixation entre ces organes, et donc de réduire sensiblement la masse de l'ensemble.

A noter à ce sujet que dans la technique antérieure, ces éléments de fixation (vis ou rivets) travaillent en traction, ce qui est défavorable et nécessite donc un sur-dimensionnement de ces organes, conduisant *in fine* à un surcroît de poids.

Suivant d'autres caractéristiques optionnelles :
- concernant ladite poutre, ladite partie formant cuvette comporte sur ses parois deux rangées d'orifices aptes à recevoir des organes de fixation de ces parois sur ledit demi-cadre avant ;
- ledit demi-cadre avant comprend, à ladite extrémité, deux rangées d'orifices aptes à recevoir des organes de fixation de cette extrémité sur les parois de la cuvette d'une poutre conforme à ce qui précède.

La présence de ces deux rangées d'orifices permet de mettre en oeuvre deux rangées d'organes de fixation, ce qui est particulièrement favorable à une répartition de la transmission des efforts entre chaque demi-cadre avant et les cuvettes associées.

La présente invention se rapporte également à un inverseur de poussée à grilles, remarquable en ce qu'il comprend deux demi-structures conformes à ce qui précède, et à une nacelle pour turboréacteur, remarquable en ce qu'elle comprend un inverseur de poussée conforme à ce qui précède.

D'autres caractéristiques et avantages de la présente invention apparaîtront à la lumière de la description qui va suivre et à l'examen des figures ci-annexées dans lesquelles :
- la figure 1 représente une demi-structure pour inverseur de poussée selon l'invention,
- la figure 2 représente une vue de détail de la zone II de la figure 1,
- la figure 3 représente une vue de la poutre supérieure de la figure 2, cette poutre supérieure ayant été séparée du demi-cadre avant,
- la figure 4 représente une vue de détail de la zone IV de la figure 1, et
- la figure 5 représente une vue de la poutre inférieure de la figure 4, cette poutre inférieure ayant été séparée du demi-cadre avant.

En se reportant à présent à la fiugre1, on a représenté un demi-cadre avant 1 fixé sur une poutre supérieure 3 et une poutre inférieure 5.

Les termes «supérieure» et «inférieure» s'entendent par rapport au positionnement final des poutres 3 et 5 dans un inverseur de poussée.

Les poutres 3 et 5 sont souvent désignées respectivement par les termes «12 heures» et «6 heures», par analogie avec le positionnement des aiguilles sur le cadran d'une horloge.

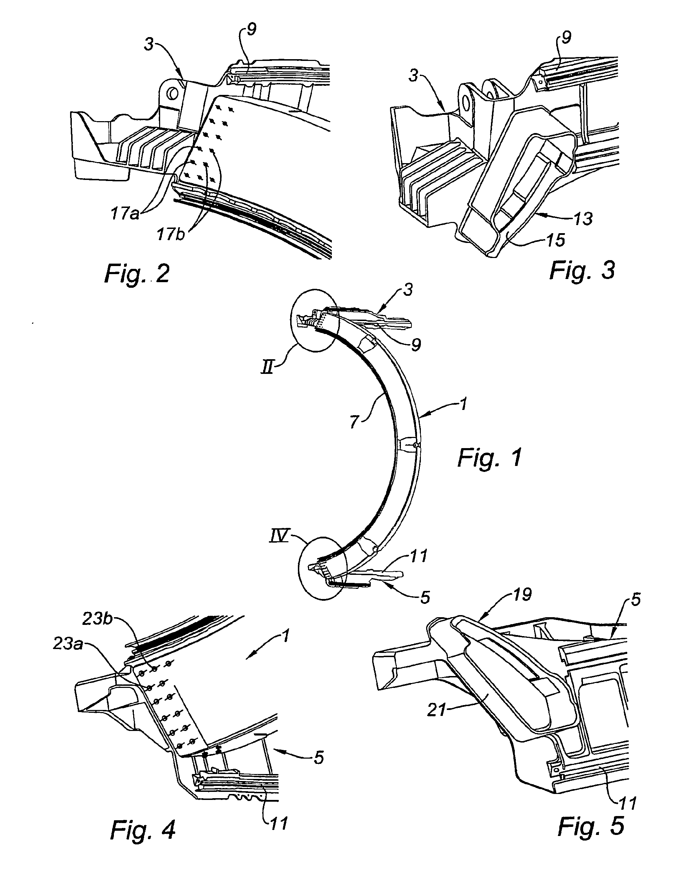

L'ensemble formé par le demi-cadre avant 1 et les deux poutres 3 et 5 constitue la demi-structure d'un inverseur de poussée, ce qui signifie qu'en réalité une demi-structure symétrique vient compléter celle qui est représentée sur la figure 1, de manière à constituer sensiblement un cercle fermé.

Les deux cadres avant de ces deux demi structures sont destinés notamment à permettre la fixation de l'inverseur de poussée sur le carter de soufflante du turboréacteur d'un aéronef (non représenté).

En particulier, comme cela est connu en soi, le bord intérieur 7 du demi-cadre avant 1 est destiné à s'insérer à l'intérieur d'une rainure en V (souvent désignée par « V groove ») située sur le bord du carter de soufflante.

Les poutres 3 et 5 comportent quant à elles des rails respectivement 9 et 11 permettant le coulissement d'un capot d'inverseur de poussée, entre une position de croisière dite de « jet direct » et une position d'inversion de poussée dite de « jet inversé ».

En pratique, la circulation de l'air permettant l'inversion de poussée s'effectue à travers des grilles non représentées fixées notamment sur le demi-cadre avant 1 et s'étendant à la périphérie de ce demi-cadre entre les deux poutres 3 et 5.

En se reportant plus particulièrement aux figures 2 et 3, on peut voir que la poutre supérieure 3 comprend une partie 13 délimitée par une paroi 15 définissant une forme de cuvette.

Cette forme de cuvette est adaptée pour s'encastrer de manière complémentaire à l'intérieur de l'extrémité supérieure du demi-cadre avant 1, étant noté que ce demi-cadre avant 1 définit une structure sensiblement creuse.

En d'autres termes, lorsque la cuvette 13 est encastrée à l'intérieur du demi-cadre avant 1, elle vient en quelque sorte boucher l'extrémité supérieure de ce demi-cadre avant.

Comme cela est visible sur la figure 2, tant la paroi 15 que l'extrémité supérieure du demi-cadre avant 1 comportent deux rangées d'orifices permettant d'accueillir deux rangées 17a et 17b d'organes de fixation tels que des vis ou des rivets.

La paroi 15 définissant la cuvette 13 est formée d'un seul bloc avec le reste de la poutre 3.

En d'autres termes, la cuvette 13 et la poutre 3 forment une seule et même pièce.

De manière analogue, la partie inférieure du demi-cadre avant 1 coopère avec la poutre inférieure 5 par l'intermédiaire d'une cuvette 19 définie par une paroi 21 formée d'un seul bloc avec la poutre inférieure 5.

Comme cela est visible sur la figure 4, on prévoit là également deux rangées d'organes de fixation 23a, 23b, permettant de solidariser l'extrémité inférieure du demi-cadre avant 1 avec la cuvette 19.

Comme on pourra le comprendre à la lumière de la description qui précède, le fait d'intégrer des cuvettes 13, 19 aux poutres respectives 3, 11 permet de réduire le nombre de pièces constitutives de la structure de l'inverseur de poussée.

Contrairement à l'état de la technique, il n'est plus nécessaire de prévoir des moyens de fixation des cuvettes sur leurs poutres associées.

On obtient de la sorte un gain de poids substantiel, et ce d'autant plus que, les organes de fixation de la technique antérieure travaillant en traction, il fallait prévoir de les surdimensionner, et donc d'augmenter leur poids.

On notera que la présence de deux rangées d'organes de fixation 17a, 17b et 23a, 23b permet une transmission optimale des efforts entre les poutres 3, 5 et le demi-cadre avant 1.

Bien entendu, la présente invention n'est nullement limitée au mode de réalisation décrit et représenté, fourni à titre de simple exemple.

## Revendications

1. Poutre (3, 5) pour structure d'inverseur de poussée, **caractérisée en ce qu'**elle comprend une partie intégrée formant cuvette (13, 19) apte à s'encastrer dans et à être fixée sur un demi-cadre avant (1) dudit inverseur de poussée.

2. Poutre (3, 5) selon la revendication 1, **caractérisée en ce que** ladite partie formant cuvette (13, 19) comporte sur ses parois deux rangées d'orifices aptes à recevoir des organes de fixation (17a, 17b, 23a, 23b) de ces parois sur ledit demi-cadre avant (1).

3. Demi-cadre avant (1) pour structure d'inverseur de poussée, **caractérisé en ce qu'**il est conformé, à au moins l'une de ses deux extrémités, pour pouvoir s'encastrer sur et être fixé sur une cuvette (13, 19) d'une poutre (3, 5) conforme à l'une des revendications 1 ou 2.

4. Demi-cadre avant (1) selon la revendication 3, **caractérisé en ce qu'**il comprend, à ladite extrémité, deux rangées d'orifices aptes à recevoir des organes de fixation (17a, 17b, 23a, 23b) de cette extrémité sur les parois (15, 21) de la cuvette (13, 19) d'une poutre (3, 5) conforme à la revendication 2.

5. Demi-structure pour inverseur de poussée, **caractérisée en ce qu'**elle comprend des poutres supérieure (3) et inférieure (5) conformes à l'une des revendications 1 ou 2, et un demi-cadre avant (1) conforme à l'une des revendications 3 ou 4, ce demi-cadre avant (1) étant fixé sur les cuvettes (13, 19) desdites poutres (3, 5).

6. Inverseur de poussée à grilles, **caractérisé en ce qu'**il comprend deux demi-structures (1) conformes à la revendication 5.

7. Nacelle pour turboréacteur, **caractérisée en ce qu'**elle comprend un inverseur de poussée conforme à la revendication 6.

## Patentansprüche

1. Balken (3, 5) für Schubumkehrerstruktur, **dadurch gekennzeichnet, dass** er einen integrierten Teil, der eine Schale (13, 19) bildet, umfasst, die geeignet ist, sich in einen halben vorderen Rahmen (1) des Schubumkehrers einzufügen und an ihm befestigt zu sein.

2. Balken (3, 5) nach Anspruch 1, **dadurch gekennzeichnet, dass** der Teil, der die Schale (13, 19) formt, auf seinen Wänden zwei Reihen von Öffnungen umfasst, die geeignet sind, um Befestigungsorgane (17a, 17b, 23a, 23b) dieser Wände an dem halben vorderen Rahmen (1) aufzunehmen.

3. Halber vorderer Rahmen (1) für Schubumkehrerstruktur, **dadurch gekennzeichnet, dass** er an mindestens einem seiner zwei Enden ausgebildet ist, um sich auf einer Schale (13, 19) eines Balkens (3, 5) nach einem der Ansprüche 1 oder 2 einzufügen und an ihm befestigt zu sein.

4. Halber vorderer Rahmen (1) nach Anspruch 3, **dadurch gekennzeichnet, dass** er an dem Ende zwei Reihen von Öffnungen umfasst, die geeignet sind, um Befestigungsorgane (17a, 17b, 23a, 23b) dieses Endes auf den Wänden (15, 21) der Schale (13, 19) eines Balkens (3, 5) nach Anspruch 2 aufzunehmen.

5. Halbstruktur für Schubumkehrer, **dadurch gekennzeichnet, dass** sie einen oberen Balken (3) und einen unteren Balken (5) nach einem der Ansprüche 1 oder 2 umfasst, und einen halben vorderen Rahmen (1) nach einem der Ansprüche 3 oder 4, wobei dieser halbe vordere Rahmen (1) auf den Schalen (13, 19) der Balken (3, 5) befestigt ist.

6. Schubumkehrer mit Gittern, **dadurch gekennzeichnet, dass** er zwei halbe Strukturen (1) nach Anspruch 5 umfasst.

7. Gondel für Turbinenstrahltriebwerk, **dadurch gekennzeichnet, dass** sie einen Schubumkehrer nach Anspruch 6 umfasst.

## Claims

1. A beam (3, 5) for a thrust reverser structure, **characterized in that** it comprises an integral part forming a casing (13, 19), capable of fitting into and of being fastened to a front half-frame (1) of said thrust reverser.

2. The beam (3, 5) according to claim 1, **characterized in that** said part forming a casing (13, 19) includes on its walls two rows of orifices capable of receiving members (17a, 17b, 23a, 23b) for fastening these walls to said front half-frame (1).

3. A front half-frame (1) for a thrust reverser structure, **characterized in that** it is shaped, at least at one of its two ends, so as to be capable of being fitted onto and of being fastened to a casing (13, 19) of a beam (3, 5) according to any of claims 1 or 2.

4. The front half-frame (1) according to claim 3, **characterized in that** it comprises, at said end, two rows of orifices capable of receiving members (17a, 17b, 23a, 23b) for fastening this end to the walls (15, 21) of the casing (13, 19) of a beam (3, 5) according to claim 2.

5. A half-structure for a thrust reverser, **characterized in that** it comprises upper (3) and lower (5) beams according to any of claims 1 or 2, and a front half-frame (1) according to any of claims 3 or 4, this front half-frame (1) being fastened to the casings (13, 19) of said beams (3, 5).

6. A grid-type thrust reverser, **characterized in that** it comprises two half-structures (1) according to claim 5.

7. A turbojet engine nacelle, **characterized in that** it comprises a thrust reverser according to claim 6.
